# EUROPÄISCHE PATENTSCHRIFT

(11) **EP 3 048 087 B1**
(45) Veröffentlichungstag und Bekanntmachung des Hinweises auf die Patenterteilung: **14.04.2021**
(21) Anmeldenummer: 15151764.6
(22) Anmeldetag: 20.01.2015
(51) Int. Cl.: C04B 28/08, C04B 7/153, E21D 11/10, E21F 15/00

(54) **Zur Ringraumverfüllung geeignete zementfreie Baustoffmischung**
Cementless building material mixture suitable for filling ring area
Mélange de matériau de construction sans ciment adapté au remplissage d'espace annulaire

(43) Veröffentlichungstag der Anmeldung: 27.07.2016
(73) Patentinhaber: MC-Bauchemie Müller GmbH & Co. KG Chemische Fabriken, 46238 Bottrop (DE); Porr Bau GmbH, 1100 Wien (AT)
(72) Erfinder: HÖRLEIN, Norbert, 1220 Wien (AT); KLEEN, Eugen, 46514 Schermbeck (DE)
(74) Vertreter: Zenz Patentanwälte Partnerschaft mbB

(56) Entgegenhaltungen:
- EP-A2- 1 790 624
- WO-A1-99/67183
- WO-A1-2010/017571
- WO-A1-2014/166875
- DE-B3-102009 008 451

## Beschreibung

Die Erfindung betrifft ein Baustoffsystem zum Herstellen einer Baustoffmischung gemäß Anspruch 1, welche zum Verfüllen eines Ringraums zwischen der Außenfläche eines Tübbingrings und einem ihn umgebenden Baugrund geeignet ist und durch Mischen einer Grundkomponente mit einer Aktivatorkomponente hergestellt wird, wobei beide Komponenten flüssig sind und wobei die Grundkomponente ein Bentonit, und ein Bindemittel enthält und eine verzögerte Abbindezeit aufweist und wobei die Aktivatorkomponente einen Aktivator zum Aktivieren des Abbindens des Bindemittels enthält.

Eine aus diesen Komponenten bestehende Baustoffmischung wird üblicherweise zum Verfüllen eines Ringraums zwischen der Außenfläche eines Tübbingrings und einem ihn umgebenden Baugrund eines Tunnelbauwerks eingesetzt. Die aus den beiden Komponenten bestehende Baustoffmischung wird erst kurz vor dem Einbringen in den Ringraum durch Mischen der Komponenten hergestellt, wobei die Zusammensetzungen der Grundkomponente und der Aktivatorkomponente derart gewählt sind, dass die Baustoffmischung nach dem Mischen nach einer kurzen Reaktionszeit innerhalb des Ringraums eines Gel-Konsistenz erlangt, so dass eine ausreichende Anfangsfestigkeit vorliegt und das Füllmaterial nicht ausgehend vom Schildschwanz der Tunnelvortriebsmaschine in Richtung Abbaukammer fließen kann.

Aus dem Artikel "Mörtel im Tunnelbau - Stand der Technik und aktuelle Entwicklungen zur Verfüllung des Ringspaltes bei Tunnelvortriebsmaschinen" von Professor Dr.-Ing. Markus Thewes und Dipl.-Ing. Christoph Budach, Bauportal 12/2009, S. 706-711 sind verschiedene Verfahren und Materialien zum Verfüllen des Ringspaltes bekannt. Wie dem Artikel zu entnehmen ist, wird üblicherweise ein zementhaltiger Ringspaltmörtel verwendet. Daneben ist auch eine Zwei-Komponenten-Baustoffmischung aus dem Artikel bekannt (S. 709, Tabelle 3), wobei die Grundkomponente, dort Komponente A genannt, Wasser, Bentonit, Zement und einen Stabilisator enthält, der das Abbinden des Zements verzögern soll. Der Artikel nennt auch Ein-Komponenten-Ringspaltmörtel ohne Zement, welche anstelle des Zements Flugasche enthalten. Dieser wird auch als inaktiver Ringspaltmörtel bezeichnet. Derartige den Ringspalt füllende Mörtel werden verwendet, um das bei einem Stillstand des Systems mögliche Abbinden der Mischung in den Zuführleitungen zu vermeiden. Bei der Flugasche handelt es sich um ein puzzolanes Bindemittel, welches selbstständig nicht abbindet (deshalb "inaktiver Ringspaltmörtel" genannt). Zum Abbinden bedarf es der Zugabe eines Calciumhydroxids. Aus dem Artikel von L. Linger, M. Cayrol und L. Boutillon, "TBM's backfill mortars - Overview - Introduction to Rheological Index" in "Tailor Made Concrete Structures", Taylor & Francis Group, London, 2008, Seiten 271 bis 276, ist ein Füllmörtel bekannt (vgl. Absatz 2.2, Ziffer 4. auf Seite 272), bei dem der puzzolane Effekt bei pulverisierter Flugasche mittels Zugabe von Calciumhydroxid zum Abbinden ausgenutzt wird.

Aus der WO 99/67183 A1 ist eine Baustoffmischung zur UnterWasser-Anwendung zum Füllen von wassergefüllten Rissen in Stein- und Betonbauwerken, wie Dämmen oder Tunneln, bekannt. Die Baustoffmischung verwendet anstelle von Portlandzement ein latent-hydraulisches Bindemittel, insbesondere Hüttensand, in einem relativ hohen Anteil und enthält ferner Zuschlag mit geringer Korngröße, Additive und Wasser. Zum Aktivieren des Hüttensands wird der Mischung eine alkalische Aktivatorkomponente, beispielsweise Wasserglas, Zementklinker, Kalk oder Gips oder deren Mischungen, hinzugefügt. Als weitere Bestandteile der Mischung können ferner Füllstoffe, Flugasche, Silicapulver, Zellulosederivate, Stearate, Bentonite und Fasern enthalten ein. Bentonit-Alkali- und -Erdalkali-Salze werden als Konsistenzpromoter zum Verhindern des Schrumpfens der Mischung eingesetzt.

Aus der WO 2010/017571 A1 ist ein hydraulisches Bindemittel zur Herstellung eines Mörtels, in dem ein Opferanodenmaterial, vorzugsweise Zink, eingebettet wird, für den Korrosionsschutz von Stahl bekannt. Das hydraulische Bindemittel umfasst zwei Komponenten, ein latent hydraulisches Alumosilikatglas und einen Alkaliaktivator. Das Alumosilikatglas ist vorzugsweise Hochofenschlacke oder auch Flugasche mit einem hohen Glasanteil. Der Alkaliaktivator ist vorzugsweise ein Alkali-Wasserglas. Zusätzlich kann das Bindemittel ein latent hydraulisches Zusatzmittel enthalten, z.B. ein calciumfreies, latent hydraulisches Alumosilikat oder ein natürliches oder künstliches Puzzolan, wie z.B. ein calciniertes (also bei 500 - 900 °C gebranntes) Tonmineral, wie beispielsweise Metakaolin, hergestellt aus Kaolin durch Calcinieren bei 600 °C.

Aus der DE 10 2009 008 451 B3 ist ein wasserdurchlässiger Mörtel zum Verfüllen von Hohlräumen, beispielsweise von Ringspalten im Tunnelbau, bekannt, wobei der Mörtel aus Zement (Portland- und/oder Hüttenzement) als hydraulischem Bindemittel, Zuschlagstoffen (amorphes Granulat, wie Blähglasgranulat), einem Tensid als Schaumbildner (z.B. MC Centrament Air 202 Konzentrat) und einem Wirkstoff auf Basis von Polyethylenoxid in Kombination mit Celluloseether als Stabilisator zur Erreichung einer erhöhten Viskosität und Wasser zusammengesetzt ist. Ein ähnlicher Ringspaltmörtel mit einem hydraulischen Bindemittel (Zement), Flugasche, Polymerschaumstoffteilchen (z.B. geschäumten Polystyrolkügelchen) und Tensiden als Schaumbildner ist aus EP 1 790 624 A2 bekannt.

Aus der WO 2014/166875 A1 ist eine zementöse Mehrkomponenten-Zusammensetzung zur Verwendung als Fugen- oder Injektionsmörtel mit einer Bindemittel- und einer Härterkomponente bekannt, wobei die Bindemittelkomponente Hüttensand und Wasser und die Härterkomponente Natriumwasserglaslösung mit mindestens 42 Gew.-%, vorzugsweise zwischen 45 Gew.-% und 50 Gew.-%, insbesondere etwa 47 Gew.-%, Natriumsilikat enthält. Die Druckschrift widmet sich dem Ziel, einen Injektionsmörtel mit guter Fließfähigkeit, einer Gelzeit (nach Mischen der beiden Komponenten) im Bereich von 10 - 100 Sekunden und ausreichender Druckfestigkeit von mindestens 0,5 MPa bereits nach 2 Stunden zu erzielen, wobei die Bindemittelkomponente (getrennt von der Härterkomponente) mindestens 1 Tag stabil bleiben soll. Bentonit kann als Rheologiemodifizierer in einem Anteil zwischen 0,001 und 2 Gew.- %, vorzugsweise 0,01 - 1 Gew.-%, besonders bevorzugt 0,05 - 0,5 Gew.-%, bezogen auf das Gesamtgewicht der Zusammensetzung, zugegeben werden. Bei einer in der Druckschrift offenbarten Ausführungsform ist die Zusammensetzung im Wesentlichen frei von Portland-Zement. Die offenbarte Mehrkomponenten-Zusammensetzung soll als Mauermörtel, Feuerschutzmörtel, Mörtel zum Verfüllen von Fugen oder Estrichmörtel, insbesondere als Estrich- oder hinterfüllter Mörtel ("back filled grout") verwendet werden. Die für diesen Zweck vorgeschlagenen Zusammensetzungen sind frei von Gesteinskörnungen und weisen einen hohen Anteil der Alkalisilikat-Härterkomponente von 21 - 30 Gew.-%, bezogen auf das Gesamtgewicht der Zusammensetzung, auf.

Aufgabe der Erfindung ist es, bei dem eingangs genannten Zwei-Komponenten-Baustoffsystem die Eigenschaften der eingesetzten Baustoffmischung zu verbessern, insbesondere deren Eignung zur Ringraumverfüllung zu verbessern.

Diese Aufgabe wird erfindungsgemäß durch ein Baustoffsystem zum Herstellen einer Baustoffmischung zum Verfüllen eines Ringraums zwischen der Außenfläche eines Tübbingrings und einem ihn umgebenden Baugrund mit den Merkmalen des Anspruchs 1 gelöst.

Das Baustoffsystem besteht aus im Wesentlichen zementklinker-freien Komponenten und umfasst eine Grundkomponente und eine zum Herstellen der Baustoffmischung mit der Grundkomponente zu mischende Aktivatorkomponente. Die Grundkomponente besteht aus Wasser, gelösten Bestandteilen und Partikeln unter 5 mm, vorzugsweise unter 3 mm, Durchmesser, hat eine dünnflüssige Konsistenz, enthält wenigstens ein Bentonit, wenigstens ein latent-hydraulisches Bindemittel und wenigstens eine Gesteinskörnung und bindet entweder nicht selbstständig ab oder weist eine Abbindezeit auf, die auf mindestens 48 Stunden verzögert ist. Die Aktivatorkomponente ist ebenfalls flüssig und enthält wenigstens einen Aktivator zum Aktivieren des latent-hydraulischen Bindemittels. Das latent-hydraulische Bindemittel ist in einem Anteil von 10 bis 30 Gew.-%, das Bentonit in einem Anteil von 2 bis 10 Gew.-%, die Gesteinskörnungen in einem Anteil von 20 bis 60 Gew.-% und Wasser in einem Anteil von 20 bis 50 Gew.-% in der Baustoffmischung enthalten. Der Anteil der Aktivatorkomponente liegt unter 15 Gew.-%.

Es hat sich gezeigt, dass eine derartige Zusammensetzung eine für das Verfüllen eines Ringraums zwischen der Außenfläche eines Tübbingrings und dem ihn umgebenden Baugrund besonders geeignete Baustoffmischung ergibt. Bentonite sind Mischungen aus verschiedenen Tonmineralien und enthalten als wichtigsten Bestandteil Montmorillonit. Bentonit-Wasser-Mischungen weisen ein thixotropes Verhalten auf, das heißt, sie stellen in Bewegung eine Flüssigkeit dar, bilden aber in Ruhe einen Festkörper aus. Dies ist vorteilhaft für den gewünschten Einsatzzweck, nämlich die Hinterfüllung von Tübbingen. Außerdem gestattet es der geringe Anteil der Aktivatorkomponente, dass die Aktivatorkomponente am Ort der Herstellung der Baustoffmischung, d.h. am Ort des Tunnelvortriebs, bevorratet werden kann.

Zur Verbesserung der Eigenschaften tragen die Verwendung eines latent-hydraulischen Bindemittels und das Vermeiden der Zugabe von Zementklinker bei. Latent-hydraulische Stoffe besitzen die Eigenschaft, bei einer entsprechenden Anregung (Aktivierung) selbstständig hydraulisch erhärten zu können. Im Unterschied zu Puzzolanen, welche zum Abbinden Calciumhydroxid verbrauchen, benötigen die latent-hydraulischen Bindemittel nur ein alkalisches oder auch sulfatisches Milieu, um abzubinden, das heißt um CSH-Phasen zu bilden.

Die Zusammensetzung der Grundkomponente, insbesondere der Anteil das latent-hydraulischen Bindemittels, und die Zusammensetzung der Aktivatorkomponente, insbesondere die Art und der Anteil des Aktivators, sind so gewählt, dass bei dem Mischen eine Baustoffmischung entsteht, die nach einer kurzen Reaktionszeit von weniger als 5 Minuten, vorzugsweise weniger als 3 Minuten, insbesondere von etwa 30-60 Sekunden, eine Gel-Konsistenz erlangt. Anschließend härtet die Baustoffmischung aus.

Bei einer Ausführungsform des erfindungsgemäßen Baustoffsystems enthält die Grundkomponente außerdem wenigstens einen puzzolanen Stoff. In diesem Fall wird die Aktivatorkomponente derart angepasst, dass auch der puzzolane Stoff im vorhandenen Stoffgemisch abbindet.

Bei einer anderen Ausführungsform enthält die Grundkomponente außerdem Flugasche und/oder Silicastaub. In Abhängigkeit von der Zusammensetzung der Flugasche wirkt diese teilweise als latent-hydraulisches Bindemittel, teilweise als puzzolaner Stoff. Silicastaub kann ebenfalls als puzzolaner Stoff eingesetzt werden. Auch bei Zumischung dieser Bestandteile zu der Grundkomponente sind der Anteil und die Zusammensetzung der Aktivatorkomponente entsprechend anzupassen. Durch die Zumischung der hier genannten optionalen Stoffe können einerseits die Eigenschaften der Baustoffmischung an die Einsatzbedingungen angepasst werden; andererseits können mit Hilfe dieser Anteile die Herstellungskosten der Baustoffmischung variiert werden.

Beispielsweise enthält die Baustoffmischung etwa 15 bis 20 Gew.-% des latent-hydraulischen Bindemittels, 2 bis 4 % des Bentonits, 35 bis 45 Gew.-% der Gesteinskörnungen und 25 bis 25 Gew.-% Wasser. In geringen Anteilen können übliche Zusatzmittel enthalten sein.

Bei einer bevorzugten Ausführungsform des erfindungsgemäßen Baustoffsystems ist das latent-hydraulische Bindemittel gemahlener Hüttensand. Dieser ist nicht nur preiswert; sein Abbindevermögen kann außerdem nicht nur basisch, sondern auch sulfatisch aktiviert werden. Bei einer Ausführungsform ist der Aktivator alkalisch, wobei beispielsweise ein Erdalkalioxid und/oder Erdalkalihydroxid, vorzugsweise Calciumoxid und/oder Calciumhydroxid, verwendet werden kann.

Bei einer anderen Ausführungsform ist der zum Aktivieren des latent-hydraulischen gemahlenen Hüttensands verwendete Aktivator ein Alkali-Wasserglas, beispielsweise Natrium- oder Kaliumwasserglas. Dieses ist vorteilhafterweise hoch alkalisch und enthält auch Siliciumdioxid, welches mit dem Hüttensand reagieren kann.

Bei einer Ausführungsform, bei der der verwendete Hüttensand hochbasisch ist und einen hohen Anteil an Aluminiumoxid aufweist, kann vorzugsweise ein Aktivator verwendet werden, der ein Sulfat, vorzugsweise Calciumsulfat (Gips) enthält. Diese Ausführungsform des Baustoffsystems eignet sich dann insbesondere für ein Verfüllen eines Ringraums zwischen der Außenfläche eines Tübbingrings und einem ihm umgebenden Baugrund, der einen hohen Sulfatgehalt aufweist.

Bei einer bevorzugten Ausführungsform ist das Baustoffsystem dadurch gekennzeichnet, dass der Anteil der Aktivatorkomponente bei etwa 5 bis 10 Gew.-% liegt. Dieser geringe Anteil gestattet es, dass die Aktivatorkomponente am Ort der Herstellung der Baustoffmischung (durch Mischen der Grundkomponente mit der Aktivatorkomponente) bevorratet werden kann.

Bei einer besonders bevorzugten Ausführungsform ist die hergestellte Baustoffmischung dadurch gekennzeichnet, dass sie Luft in Form von Schaumbläschen in einem Anteil von 5 bis 50 Vol.-% enthält. Dieses Luftvolumen (Schaum) kann durch ein beliebiges Aufschäumen hergestellt werden, wobei vorzugsweise der Baustoffmischung vorab eine Tensidkomponente des Baustoffsystems zugegeben wird. Vorzugsweise wird eine solche Baustoffmischung, die einen Luftanteil von 5 bis 50 Vol.-% enthält, durch Verwendung eines Schaumgenerators hergestellt.

Die aus dem erfindungsgemäßen Baustoffsystem hergestellte Baustoffmischung wird zum Verfüllen eines Ringraums zwischen der Außenfläche eines Tübbingrings und dem ihn umgebenden Baugrund verwendet. Wird hierfür eine Baustoffmischung verwendet, die Luft in Form von Schaumbläschen in einem Anteil von 5 bis 50 Vol.-% enthält, so weist das Baustoffsystem außerdem eine Tensidkomponente auf und wird die durch Mischen der Komponenten hergestellte Baustoffmischung durch eine als Begasungsstrecke ausgebildete rohrförmige Strömungskammer eines Schaumgenerators hindurchgeleitet, wobei der Baustoffmischung über eine gasdurchlässige poröse Wandung der Begasungsstrecke Luft zugeführt wird, indem einer die rohrförmige Strömungskammer zumindest teilweise umschließenden Druckkammer des Schaumgenerators Druckluft zugeführt, wodurch eine Schaum enthaltende Baustoffmischung gebildet wird. Beispielsweise kann die Grundkomponente als Schaum hergestellt werden, wobei dem Schaum kurz vor dem Einbringen in den Ringspalt die Aktivatorkomponente zugemischt wird. Der dann in den Ringraum eingebrachte Baustoffschaum erlangt nach kurzer Zeit eine Gel-Konsistenz und kann eine Stützfunktion erfüllen. Anschließend härtet der Baustoffschaum aus. Die Verwendung eines Baustoffschaums hat den Vorteil, dass die Eigenschaften über den Anteil und die Größenverteilung der Luftbläschen des Schaums eingestellt werden können.

Bei einer anderen Verwendung eines Baustoffsystems, dessen Grundkomponente gemahlenen Hüttensand enthält und bei dem der Hüttensand hochbasisch ist und einen hohen Anteil von Aluminiumoxid aufweist und/oder der Aktivator ein Sulfat, vorzugsweise Calciumsulfat, enthält, wird ein Ringraum zwischen der Außenfläche eines Tübbingrings und einem ihn umgebenden Baugrund verfüllt, wobei der Baugrund einen hohen Sulfatgehalt aufweist.

Vorteilhafte und/oder bevorzugte Weiterbildungen der Erfindung sind in den Unteransprüchen gekennzeichnet.

Im Folgenden wird die Erfindung anhand eines bevorzugten Ausführungsbeispiels näher beschrieben.

Die bevorzugte Ausführungsform ist ein Baustoffsystem zum Herstellen einer Baustoffmischung, welche zum Verfüllen eines Ringraums zwischen der Außenfläche eines Tübbingrings und den ihm umgebenden Baugrund eingesetzt wird, wobei das Baustoffsystem aus im Wesentlichen zementklinker-freien Komponenten besteht. "Im Wesentlichen" bedeutet hier, dass Zementklinker allenfalls in Form von Verunreinigungen oder Spuren enthalten sein kann. Die Baustoffmischung wird durch Mischen einer Grundkomponente mit einer Aktivatorkomponente hergestellt, wobei das Mischen kurz vor dem Einbringen in den Ringraum erfolgt. Die Grundkomponente besteht aus Hüttensandmehl, Bentonit, Feinstsand, Wasser und Zusatzmitteln, wobei es sich bei den Zusatzmitteln insbesondere um Dispergiermittel handelt, die ein gutes Fließverhalten gewährleisten. Die Aktivatorkomponente enthält einen alkalischen Anreger, vorzugsweise Wasserglas. Nach dem Mischen von Grund- und Aktivatorkomponente setzt sich eine vorgegebene Menge der Baustoffmischung beispielsweise aus 300 kg Hüttensandmehl, 50 kg Bentonit, 700 kg Feinstsand und 10 kg Zusatzmittel zusammen, wobei 510 l Waser hinzugemischt sind. Hinzu kommen 170 kg Aktivator.

Beim Einsatz als Füllmaterial für den Ringspalt zwischen der Außenfläche eines Tübbingrings und einem ihm umgebenden Baugrund wird vorzugsweise die Grundkomponente über eine lange Zuleitung, die mehrere Kilometer lang sein kann, zum Ort einer Tunnelvortriebsmaschine herangeführt. Die Aktivatorkomponente befindet sich in Vorratsbehältern vor Ort. Das Vermischen kann mit Hilfe einer Mischschnecke oder einer Mischdüse vorgenommen werden. Zusätzlich wird dem Gemisch vorzugsweise eine Tensidkomponente zugemischt, wobei die Tensidkomponente entweder bereits der herantransportierten Grundkomponente zugemischt sein kann oder der Aktivatorkomponente zugemischt ist. Es ist auch denkbar, dass die Tensidkomponente erst dem hergestellten Gemisch aus Grundkomponente und Aktivatorkomponente zugemischt oder dass die drei Komponenten gleichzeitig vermischt werden. Das dabei gebildete Gemisch aus Grundkomponente, Aktivatorkomponente und Tensidkomponente wird durch einen Schaumgenerator hindurchgeführt. Insbesondere wird das Gemisch durch eine als Begasungsstrecke ausgebildete rohrförmige Strömungskammer mit vorzugsweise zylindrischem Querschnitt hindurchgeführt. Die Außenwand der Strömungskammer ist durch ein poröses Material gebildet. Die Außenwand wird umgeben von einer Druckkammer, welcher Druckluft eines vorgegebenen Drucks zugeführt wird. Der Druck ist dabei so eingestellt, dass eine vorgegebene Menge Luft pro Zeiteinheit durch eine poröse Wandung in die Strömungskammer eindringt und dort Luftbläschen vorgegebener Größe und Verteilung bildet. Die Luftbläschenverteilung und -größe ist einstellbar, so dass die Eigenschaften der entstehenden Baustoffmischung gezielt beeinflusst werden können.

## Patentansprüche

1. Baustoffsystem zum Herstellen einer Baustoffmischung zum Verfüllen eines Ringraums zwischen der Außenfläche eines Tübbingrings und dem ihn umgebenden Baugrund, bestehend aus im Wesentlichen zementklinker-freien Komponenten und umfassend eine Grundkomponente, die
- aus Wasser, gelösten Bestandteilen und Partikeln unter 5 mm Durchmesser, vorzugsweise unter 3 mm Durchmesser, besteht,
- eine dünnflüssige Konsistenz hat,
- wenigstens ein Bentonit, wenigstens ein latent-hydraulisches Bindemittel und wenigstens eine Gesteinskörnung enthält und
- entweder nicht selbständig abbindet oder eine Abbindezeit aufweist, die auf mindestens 48 h verzögert ist,
und eine zum Herstellen der Baustoffmischung mit der Grundkomponente zu mischende Aktivatorkomponente, die ebenfalls flüssig ist und wenigstens einen Aktivator zum Aktivieren des latent-hydraulischen Bindemittels enthält,
wobei das latent-hydraulische Bindemittel in einem Anteil von 10 - 30 Gew.-%, das Bentonit in einem Anteil von 2 - 10 Gew.-%, die Gesteinskörnung in einem Anteil von 20 - 60 Gew.-% und Wasser in einem Anteil von 20 - 50 Gew.-% in dem Baustoffsystem enthalten ist und
wobei der Anteil der Aktivatorkomponente an dem Baustoffsystem unter 15 Gew.-% liegt.

2. Baustoffsystem nach Anspruch 1, **dadurch gekennzeichnet, dass** die Grundkomponente außerdem wenigstens einen puzzolanen Stoff enthält.

3. Baustoffsystem nach Anspruch 1 oder 2, **dadurch gekennzeichnet, dass** die Grundkomponente außerdem Flugasche und/oder Silicastaub enthält.

4. Baustoffsystem nach einem der Ansprüche 1 - 3, **dadurch gekennzeichnet, dass** das latent-hydraulische Bindemittel gemahlener Hüttensand ist.

5. Baustoffsystem nach Anspruch 4, **dadurch gekennzeichnet, dass** der Aktivator alkalisch ist.

6. Baustoffsystem nach Anspruch 5, **dadurch gekennzeichnet, dass** der Aktivator eine Erdalkalioxid und/oder Erdalkalihydroxid, vorzugsweise Calciumoxid und/oder Calciumhydroxid, enthält.

7. Baustoffsystem nach Anspruch 5, **dadurch gekennzeichnet, dass** der Aktivator ein Alkaliwasserglas enthält.

8. Baustoffsystem nach Anspruch 4, **dadurch gekennzeichnet, dass** der Hüttensand hochbasisch ist und einen hohen Anteil von Aluminiumoxid aufweist.

9. Baustoffsystem nach Anspruch 4 oder 8, **dadurch gekennzeichnet, dass** der Aktivator ein Sulfat, vorzugsweise Calciumsulfat, enthält.

10. Baustoffsystem nach einem der Ansprüche 1 - 9, **dadurch gekennzeichnet, dass** der Anteil der Aktivatorkomponente an dem Baustoffsystem bei 5 - 10 Gew.-% liegt.

11. Verwendung eines Baustoffsystems nach einem der Ansprüche 1 - 10 zum Herstellen einer Baustoffmischung durch Mischen der Komponenten und anschließendem Verfüllen eines Ringraums zwischen der Außenfläche eines Tübbingrings und dem ihn umgebenden Baugrund mit der Baustoffmischung.

12. Verwendung nach Anspruch 11,
wobei das Baustoffsystem außerdem eine Tensidkomponente umfasst und
wobei die durch Mischen der Grundkomponente, der Aktivatorkomponente und der Tensidkomponente gebildete Baustoffmischung durch eine als Begasungsstrecke ausgebildete rohrförmige Strömungskammer eines Schaumgenerators hindurchgeleitet wird, wobei der Baustoffmischung über eine gasdurchlässige poröse Wandung der Begasungsstrecke Luft zugeführt wird, indem einer die rohrförmige Strömungskammer zumindest teilweise umschließenden Druckkammer des Schaumgenerators Druckluft zugeführt wird, wodurch eine Schaum enthaltende Baustoffmischung gebildet wird, die Luft in einem Anteil von 5 - 50 Vol.-% enthält.

## Claims

1. A building material system for producing a building material mixture for filling an annular gap between the outer surface of a tubing ring and the ground surrounding it, consisting of essentially cement clinker-free components and comprising a basic component which
- consists of water, dissolved constituents and particles less than 5 mm diameter, preferably less than 3 mm diameter,
- has a thin-fluid consistency,
- contains at least one bentonite, at least one latent-hydraulic binder and at least one aggregate and
- either does not set independently or has a setting time which is delayed to at least 48 h,
and an activator component to be mixed with the basic component to produce the building material mixture, which is also fluid and contains at least one activator for activating the latent-hydraulic binder,
wherein the latent-hydraulic binder is contained in a proportion of 10 - 30 % by weight, the bentonite in a proportion of 2 - 10 % by weight, the aggregate in a proportion of 20 - 60 % by weight and water in a proportion of 20 - 50 % by weight in the building material system and
wherein the proportion of activator component in the building material system lies below 15% by weight.

2. The building material system according to claim 1, **characterised in that** the basic component also contains at least one pozzolanic material.

3. The building material system according to claim 1 or 2, **characterised in that** the basic component also contains fly ash and/or silica dust.

4. The building material system according to any one of claims 1 - 3, **characterised in that** the latent-hydraulic binder is ground granulated blast-furnace slag.

5. The building material system according to claim 4, **characterised in that** the activator is alkaline.

6. The building material system according to claim 5, **characterised in that** the activator contains an alkali earth oxide and/or an alkaline earth hydroxide, preferably calcium oxide and/or calcium hydroxide.

7. The building material system according to claim 5, **characterised in that** the activator contains an alkaline water glass.

8. The building material system according to claim 4, **characterised in that** the blast-furnace slag is highly basic and has a high content of aluminium oxide.

9. The building material system according to claim 4 or 8, **characterised in that** the activator contains a sulphate, preferably calcium sulphate.

10. The building material system according to any one of claims 1 - 9, **characterised in that** the proportion of the activator component in the building material system is between 5 - 10 % by weight.

11. Use of a building material system according to any one of claims 1 - 10 for producing a building material mixture by mixing the components and subsequent filling of an annular gap between the outer surface of a tubing ring and the surrounding ground with the building material mixture.

12. The use according to claim 11,
wherein the building material system also comprises a tenside component and
wherein the building material mixture formed by mixing the basic component, the activator component and the tenside component is conveyed through a tubular flow chamber of a foam generator configured as a gassing line, wherein air is fed to the building material mixture via a gas-permeable porous wall of the gassing line by feeding compressed air to a pressure chamber of the foam generator at least partially surrounding the tubular flow chamber, whereby a building material mixture containing foam is formed, which contains air in a proportion of 5 - 50 % by volume.

## Revendications

1. Système de matériaux pour fabriquer un mélange de matériau de construction adapté au remplissage d'un espace annulaire entre la surface extérieure d'un anneau de cuvelage et le sol de fondation l'entourant, composé de composants pour l'essentiel dépourvus de clinker de ciment et comprenant un composant de base, qui
- est composé d'eau, de composants et de particules dissous d'un diamètre inférieur à 5 mm, de préférence d'un diamètre inférieur à 3 mm,
- a une consistance fluide,
- contient au moins une bétonite, au moins un liant hydraulique latent et au moins un granulat et
- soit ne prend pas de façon indépendante, soit comporte un temps de prise, qui est retardé d'au moins 48 h,
et contient un composant activateur, qui est également liquide, à mélanger avec le composant de base pour fabriquer le mélange de matériaux et au moins un activateur pour activer le liant hydraulique latent,
sachant que le liant hydraulique latent est contenu dans une proportion de 10 - 30 %/poids, la bétonite dans une proportion de 2 - 10 %/poids, le granulat dans une proportion de 20 - 60 %/poids et de l'eau dans une proportion de 20 - 50 %/poids et
sachant que la part de composant activateur sur le système de matériaux se situe en dessous de 15 %/poids.

2. Système de matériaux selon la revendication 1, **caractérisé en ce que** le composant de base contient en outre au moins une matière puzzolanique.

3. Système de matériaux selon la revendication 1 ou 2, **caractérisé en ce que** le composant de base contient en outre de la cendre volante et/ou de la poussière de silice.

4. Système de matériaux selon l'une quelconque des revendications 1 - 3, **caractérisé en ce que** le liant hydraulique latent est du sable de fonderie broyé.

5. Système de matériaux selon la revendication 4, **caractérisé en ce que** l'activateur est alcalin.

6. Système de matériaux selon la revendication 5, **caractérisé en ce que** l'activateur contient un oxyde alcalinoterreux et/ou un hydroxyde alcalinoterreux, de préférence de l'oxyde de calcium et/ou de l'hydroxyde de calcium.

7. Système de matériaux selon la revendication 5, **caractérisé en ce que** l'activateur contient un silicate alcalin.

8. Système de matériaux selon la revendication 4, **caractérisé en ce que** le sable de fonderie est hautement basique et comporte une proportion élevée d'oxyde d'aluminium.

9. Système de matériaux selon la revendication 4 ou 8, **caractérisé en ce que** l'activateur contient un sulfate, de préférence du sulfate de calcium.

10. Système de matériaux selon l'une quelconque des revendications 1 ou 9, **caractérisé en ce que** la proportion de composant activateur sur le système de matériaux se situe à 5 - 10 %/poids.

11. Utilisation d'un système de matériaux selon l'une quelconque des revendications 1 - 10 pour fabriquer un mélange de matériaux en mélangeant des composants et en remplissant consécutivement un espace annulaire entre la surface extérieure d'un anneau de cuvelage et le sol de fondation l'entourant avec le mélange de matériaux.

12. Système de matériaux selon la revendication 11,
sachant que le système de matériaux comprend en outre un composant tensioactif et
sachant que le mélange de matériaux formé par le mélange du composant de base, du composant activateur et du composant tensioactif est passé à travers une chambre d'écoulement tubulaire d'un générateur de mousse, constituée sous la forme d'un segment d'apport de gaz, sachant que de l'air est acheminé au mélange de matériaux par une paroi poreuse perméable aux gaz du segment d'apport de gaz, de l'air comprimé étant acheminé à une chambre sous pression du générateur de mousse entourant au moins en partie la chambre d'écoulement tubulaire, un mélange de matériaux contenant de la mousse étant formé de ce fait, qui contient de l'air dans une proportion de 5 - 50 %/vol.
